# EUROPEAN PATENT APPLICATION

(11) **EP 4 507 373 A1**
(43) Date of publication of application: **12.02.2025**
(21) Application number: 23794707.2
(22) Date of filing: 17.02.2023
(51) Int. Cl.: H04W 28/06

(54) **SIGNAL TRANSMISSION METHOD AND APPARATUS**

(30) Priority: 28.04.2022 CN 202210470910
(71) Applicant: Huawei Technologies Co., Ltd., Shenzhen, Guangdong 518129 (CN)
(72) Inventor: SUN, Huan, Shenzhen, Guangdong 518129 (CN); JIN, Zhe, Shenzhen, Guangdong 518129 (CN); LUO, Zhihu, Shenzhen, Guangdong 518129 (CN); QU, Weilin, Shenzhen, Guangdong 518129 (CN)
(74) Representative: Pfenning, Meinig & Partner mbB
(86) International application number: PCT/CN2023/076890
(87) International publication number: WO 2023/207271

(57) **Abstract**

This application provides a signal transmission method and an apparatus, and may be applied to the communication field. The method includes: A network device may modulate first information by using a first modulation scheme and modulate second information by using a second modulation scheme in a first signal, to modulate the first information and the second information onto the first signal, where the first modulation scheme may be phase shift keying modulation or quadrature amplitude modulation, and the second modulation scheme is amplitude shift keying modulation. The network device sends the first signal on a first time-frequency resource. According to the foregoing method, the network device sends information to two types of terminal devices on a same time-frequency resource by using different modulation schemes, to improve network resource utilization.

## Description

### CROSS-REFERENCE TO RELATED APPLICATIONS

This application claims priority to Chinese Patent Application No. 202210470910.0, filed with the China National Intellectual Property Administration on April 28, 2022 and entitled "SIGNAL TRANSMISSION METHOD AND APPARATUS", which is incorporated herein by reference in its entirety.

### TECHNICAL FIELD

This application relates to the field of communication technologies, and in particular, to a signal transmission method and an apparatus.

### BACKGROUND

A new radio (new radio, NR) system is a fifth generation mobile communication technology (5th generation mobile communication technology, 5G), is characterized by a high rate, a low latency, massive connections, and the like, and is network infrastructure for implementing human-machine-thing interconnection. In the NR system, more low-capability terminal devices are introduced, and the low-capability terminal device may support features such as a smaller bandwidth and a lower-order modulation scheme. A smaller bandwidth indicates a smaller data amount that needs to be processed by the terminal device, shorter processing time, and less power consumption. Demodulation of a signal generated by using a lower-order modulation scheme not only reduces more costs than demodulation of a signal corresponding to a higher-order modulation scheme in terms of hardware complexity, but also has lower calculation complexity in subsequent data processing. Therefore, the low-capability terminal device introduced in the NR system may be characterized by a narrower bandwidth and a lower-order modulation scheme. As a result, there are a plurality of types of terminal devices that support different modulation schemes in the NR system. If a network device needs to send a signal to the plurality of types of terminal devices, the network device can send, only for a plurality of times, the signal modulated by using different modulation schemes, resulting in a waste of network resources.

In conclusion, in the NR system, how to improve resource utilization becomes a technical problem to be urgently resolved.

### SUMMARY

This application provides a signal transmission method and an apparatus, to improve resource utilization by simultaneously sending a signal to terminal devices that support different modulation schemes.

According to a first aspect, this application provides a signal transmission method. The method is used to implement a function on a network device side. For example, the method may be applied to a network device or a chip in a network device. A specific execution body of the method is not limited in this embodiment of this application. Optionally, the method may be jointly implemented by a plurality of functional modules on the network device side, and a method performed by each functional module also falls within the protection scope of this application. For example, the method is applied to a network device. In the method, the network device modulates first information and second information onto a first signal, where a first modulation scheme for the first information is different from a second modulation scheme for the second information, the first modulation scheme is phase shift keying modulation or quadrature amplitude modulation, and the second modulation scheme is amplitude shift keying modulation; and the network device sends the first signal on a first time-frequency resource.

According to the foregoing method, the network device sends the first signal to both a first terminal device and a second terminal device by using a same time-frequency resource. Because the first signal may include different information modulated by using different modulation schemes, both the first terminal device and the second terminal device can obtain corresponding information by using the first signal, to improve network resource utilization.

In a possible implementation, the method further includes: The network device receives at least one of a signal to interference plus noise ratio and a reference signal received power from a first terminal device; and if the signal to interference plus noise ratio is greater than or equal to a first threshold, and/or the reference signal received power is greater than or equal to a second threshold, the network device determines to modulate the first information and the second information onto the first signal.

The signal to interference plus noise ratio and the reference signal received power are indicators for measuring signal quality. If the signal to interference plus noise ratio is greater than or equal to the first threshold, and/or the reference signal received power is greater than or equal to the second threshold, it indicates that signal quality is good. Therefore, when the network device modulates a signal by using a plurality of modulation schemes, impact on a signal received by the first terminal device is small, and the first terminal device may demodulate, from the signal modulated by using the plurality of modulation schemes, information that needs to be received.

In a possible implementation, the method further includes: The network device receives first indication information from the first terminal device, where the first indication information indicates to modulate different information onto a same signal by using different modulation schemes; and the network device determines, based on the first indication information, to modulate the first information and the second information onto the first signal.

In a possible implementation, the method further includes: The network device sends second indication information to the first terminal device, where the second indication information indicates the network device to modulate different information onto a same signal by using different modulation schemes, and/or indicates a location of the first time-frequency resource.

According to the foregoing method, if the second indication information indicates the location of the first time-frequency resource, the first terminal device can accurately receive the signal on the first time-frequency resource, to reduce complexity of receiving the signal by the first terminal device.

In a possible implementation, a bandwidth corresponding to the first time-frequency resource is less than or equal to a maximum bandwidth of a second terminal device, and the maximum bandwidth of the second terminal device is less than a maximum bandwidth of the first terminal device.

The bandwidth of the first time-frequency resource is less than or equal to the maximum bandwidth of the second terminal device, so that it can be ensured that the first signal on the first time-frequency resource can be received by both the first terminal device and the second terminal device, to improve a communication capacity.

In a possible implementation, the method further includes: The network device receives capability information from the second terminal device, where the capability information indicates the maximum bandwidth of the second terminal device.

In a possible implementation, the first information is modulated into frequency domain of the first signal by using the first modulation scheme, and the second information is modulated into amplitude domain or power domain of the first signal by using the second modulation scheme.

In a possible implementation, a modulation depth of the second modulation scheme is *∇p,* a value range of *∇p* is an open interval (0, P), and P is an average power of all resource elements on the first time-frequency resource on which the first signal is modulated by using the first modulation scheme.

In a possible implementation, when the second information is modulated by using the second modulation scheme, modulation depths on all resource elements corresponding to each bit carrying the second information are the same, or modulation depths on all samples corresponding to each bit carrying the second information are the same.

In a possible implementation, when the second information is modulated by using the second modulation scheme, partial modulation in time domain and partial modulation in frequency domain may be included. The partial modulation in time domain means that modulation depths on all resource elements corresponding to each bit carrying the second information are not exactly the same. The partial modulation in frequency domain means that modulation depths on all samples corresponding to each bit carrying the second information are not exactly the same.

In a possible implementation, when partial modulation in time domain is used, all samples corresponding to each bit in the bits carrying the second information may be divided into two groups, powers of one group of samples remain unchanged as P, and powers of the other group of samples are modulated to 2Q-P, where Q is an average value of powers of all samples corresponding to the bit.

In a possible implementation, when partial modulation in frequency domain is used, all resource elements corresponding to each bit in the bits carrying the second information may be divided into two groups, powers of one group of resource elements remain unchanged as P, and powers of the other group of resource elements are modulated to 2Q-P, where Q is an average value of powers of all resource elements corresponding to the bit.

An average value of powers of all samples corresponding to a bit 0 may be P-∇p1, and an average value of powers of all samples corresponding to a bit 1 may be P+Vp2. ∇p1 may be equal to ∇p2, or may not be equal to ∇p2.

According to the foregoing method, when partial modulation is used, powers of some samples or resource elements in all samples or resource elements corresponding to each bit remain unchanged as P, so that modulation complexity can be reduced, and modulation efficiency can be improved.

In a possible implementation, the bits modulated onto the first signal and corresponding to the second information are coded bits obtained through line encoding. Downlink coverage performance of the second terminal can be improved by using line encoding.

In a possible implementation, the line encoding is at least one of Manchester encoding and differential Manchester encoding, and a quantity of symbols included on the first time-frequency resource is an even number.

In a possible implementation, the first information includes at least one of user-level control information, common control information, and data information.

In a possible implementation, the second information includes at least one of a broadcast message, a paging message, or a random access response message.

According to a second aspect, this application provides a signal transmission method. The method is used to implement a function on a terminal device side. For example, the method may be applied to a terminal device or a chip in a terminal device. A specific execution body of the method is not limited in this embodiment of this application. Optionally, the method may be jointly implemented by a plurality of functional modules on the terminal device side, and a method performed by each functional module also falls within the protection scope of this application. For example, the method is applied to a first terminal device. In the method, the first terminal device receives a first signal from a network device on a first time-frequency resource, where first information and second information are modulated onto the first signal, a first modulation scheme for the first information is different from a second modulation scheme for the second information, the first modulation scheme is phase shift keying modulation or quadrature amplitude modulation, and the second modulation scheme is amplitude shift keying modulation; and the first terminal device obtains the first information from the first signal.

In a possible implementation, the method further includes: The first terminal device determines at least one of a signal to interference plus noise ratio and a reference signal received power based on a reference signal from the network device; and if the signal to interference plus noise ratio is greater than or equal to a first threshold, and/or the reference signal received power is greater than or equal to a second threshold, the first terminal device sends first indication information to the network device, where the first indication information indicates to modulate different information onto a same signal by using different modulation schemes.

In a possible implementation, the method further includes: The first terminal device determines at least one of a signal to interference plus noise ratio and a reference signal received power based on a reference signal from the network device; and the first terminal device sends at least one of the signal to interference plus noise ratio and the reference signal received power to the network device.

In a possible implementation, the method further includes: The first terminal device receives second indication information from the network device, where the second indication information indicates the network device to modulate different information onto a same signal by using different modulation schemes, and/or indicates a location of the first time-frequency resource.

According to a third aspect, this application provides a signal transmission method. The method is used to implement a function on a terminal device side. For example, the method may be applied to a terminal device or a chip in a terminal device. A specific execution body of the method is not limited in this embodiment of this application. Optionally, the method may be jointly implemented by a plurality of functional modules on the terminal device side, and a method performed by each functional module also falls within the protection scope of this application. For example, the method is applied to a second terminal device. In the method, the second terminal device receives a first signal from a network device on a first time-frequency resource, where first information and second information are modulated onto the first signal, a first modulation scheme for the first information is different from a second modulation scheme for the second information, the first modulation scheme is phase shift keying modulation or quadrature amplitude modulation, and the second modulation scheme is amplitude shift keying modulation; and the second terminal device obtains the second information from the first signal.

With reference to the second aspect or the third aspect, in a possible implementation, a bandwidth corresponding to the first time-frequency resource is less than or equal to a maximum bandwidth of the second terminal device, and the maximum bandwidth of the second terminal device is less than a maximum bandwidth of the first terminal device.

With reference to the second aspect or the third aspect, in a possible implementation, the first information is modulated into frequency domain of the first signal by using the first modulation scheme, and the second information is modulated into amplitude domain or power domain of the first signal by using the second modulation scheme.

With reference to the second aspect or the third aspect, in a possible implementation, a modulation depth of the second modulation scheme is *∇p,* a value range of *∇p* is an open interval (0, P), and P is an average power of all resource elements on the first time-frequency resource on which the first signal is modulated by using the first modulation scheme.

With reference to the second aspect or the third aspect, in a possible implementation, when the second information is modulated by using the second modulation scheme, modulation depths on all resource elements corresponding to each bit carrying the second information are the same, or modulation depths on all samples corresponding to each bit carrying the second information are the same.

With reference to the second aspect or the third aspect, in a possible implementation, when the second information is modulated by using the second modulation scheme, modulation depths on all resource elements corresponding to each bit carrying the second information are not exactly the same, or modulation depths on all samples corresponding to each bit carrying the second information are not exactly the same.

With reference to the second aspect or the third aspect, in a possible implementation, the bits modulated onto the first signal and corresponding to the second information are coded bits obtained through line encoding.

With reference to the second aspect or the third aspect, in a possible implementation, the line encoding is at least one of Manchester encoding and differential Manchester encoding, and a quantity of symbols included on the first time-frequency resource is an even number.

According to a fourth aspect, an embodiment of this application provides a communication apparatus. The communication apparatus may be a network device, a module that can implement a function on a network device side, or a chip that can be disposed inside the network device. The communication apparatus has capability for implementing the method according to the first aspect. For example, the communication apparatus includes a corresponding module, unit, or means for performing some or all operations in the first aspect. The module, unit, or means may be implemented by using software or hardware, or may be implemented by hardware executing corresponding software.

In a possible design, the communication apparatus includes a processing unit and a communication unit. The communication unit may be configured to send and receive a signal, to implement communication between the communication apparatus and another apparatus. For example, the communication unit is configured to receive uplink information from a terminal device, and the processing unit may be configured to perform some internal operations of the communication apparatus. Functions performed by the processing unit and the communication unit may correspond to the operations in the first aspect.

In a possible design, the communication apparatus includes a processor, and may further include a transceiver. The transceiver is configured to send and receive a signal, and the processor completes the method according to any one of the possible designs or implementations of the first aspect by using the transceiver. The communication apparatus may further include one or more memories. The memory may be configured to be coupled to the processor, and the memory may store a computer program or instructions for implementing the function in the first aspect. The processor may execute the computer program or the instructions stored in the memory. When the computer program or the instructions is/are executed, the communication apparatus is enabled to implement the method according to any one of the possible designs or implementations of the first aspect.

In a possible design, the communication apparatus includes a processor. The processor may be configured to be coupled to a memory. The memory may store a computer program or instructions for implementing the function in the first aspect. The processor may execute the computer program or the instructions stored in the memory. When the computer program or the instructions is/are executed, the communication apparatus is enabled to implement the method according to any one of the possible designs or implementations of the first aspect.

In a possible design, the communication apparatus includes a processor and an interface circuit, and the processor is configured to: communicate with another apparatus through the interface circuit, and perform the method according to any one of the possible designs or implementations of the first aspect.

It may be understood that, the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in a memory. In addition, there may be one or more processors, and one or more memories. The memory may be integrated with the processor, or the memory and the processor are disposed separately. During specific implementation, the memory and the processor may be integrated into one chip, or may be disposed on different chips. A type of the memory and a manner in which the memory and the processor are disposed are not limited in embodiments of this application.

According to a fifth aspect, an embodiment of this application provides a communication apparatus. The communication apparatus may be a terminal device, a module that can implement a function on a terminal device side, or a chip that can be disposed inside the terminal device. The communication apparatus has capability for implementing the method according to the second aspect or the third aspect. For example, the communication apparatus includes a corresponding module, unit, or means (means) for performing some or all operations in the second aspect or the third aspect. The module, unit, or means may be implemented by using software or hardware, or may be implemented by hardware executing corresponding software.

In a possible design, the communication apparatus includes a processing unit and a communication unit. The communication unit may be configured to send and receive a signal, to implement communication between the communication apparatus and another apparatus. For example, the communication unit is configured to receive configuration information from a network device, and the processing unit may be configured to perform some internal operations of the communication apparatus. Functions performed by the processing unit and the communication unit may correspond to the operations in the second aspect or the third aspect.

In a possible design, the communication apparatus includes a processor, and may further include a transceiver. The transceiver is configured to send and receive a signal, and the processor completes the method according to any one of the possible designs or implementations of the second aspect or the third aspect by using the transceiver. The communication apparatus may further include one or more memories. The memory may be configured to be coupled to the processor, and the memory may store a computer program or instructions for implementing the function in the second aspect or the third aspect. The processor may execute the computer program or the instructions stored in the memory. When the computer program or the instructions is/are executed, the communication apparatus is enabled to implement the method according to any one of the possible designs or implementations of the second aspect or the third aspect.

In a possible design, the communication apparatus includes a processor. The processor may be configured to be coupled to a memory. The memory may store a computer program or instructions for implementing the function in the second aspect or the third aspect. The processor may execute the computer program or the instructions stored in the memory. When the computer program or the instructions is/are executed, the communication apparatus is enabled to implement the method according to any one of the possible designs or implementations of the second aspect or the third aspect.

In a possible design, the communication apparatus includes a processor and an interface circuit. The processor is configured to: communicate with another apparatus through the interface circuit, and perform the method according to any one of the possible designs or implementations of the second aspect or the third aspect.

According to a sixth aspect, an embodiment of this application provides a communication system. The communication system includes the communication apparatus according to the fourth aspect and the communication apparatus according to the fifth aspect.

According to a seventh aspect, an embodiment of this application provides a computer-readable storage medium. The computer storage medium stores computer-readable instructions, and when a computer reads and executes the computer-readable instructions, the computer is enabled to implement the method according to any one of the possible designs of the first aspect to the third aspect.

According to an eighth aspect, an embodiment of this application provides a computer program product. When a computer reads and executes the computer program product, the computer is enabled to implement the method according to any one of the possible designs of the first aspect to the third aspect.

According to a ninth aspect, an embodiment of this application provides a chip. The chip includes a processor. The processor is coupled to a memory, and is configured to read and execute a software program stored in the memory, to implement the method according to any one of the possible designs of the first aspect to the third aspect.

According to a tenth aspect, a communication apparatus is provided, including a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to the second aspect or the third aspect, and any one of the possible implementations of the second aspect or the third aspect by using a logic circuit or by executing a computer program or instructions.

According to an eleventh aspect, a communication apparatus is provided, including a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to the first aspect and any one of the possible implementations of the first aspect by using a logic circuit or by executing a computer program or instructions.

According to a twelfth aspect, a communication apparatus is provided, including a processor and a memory. The processor is coupled to the memory, and the processor is configured to execute a computer program or instructions stored in the memory, to enable the communication apparatus to implement the method according to the second aspect or the third aspect, and any one of the possible implementations of the second aspect or the third aspect.

According to a thirteenth aspect, a communication apparatus is provided, including a processor and a memory. The processor is coupled to the memory, and the processor is configured to execute a computer program or instructions stored in the memory, to enable the communication apparatus to implement the method according to the first aspect and any one of the possible implementations of the first aspect.

According to a fourteenth aspect, a chip is provided. The chip includes a processor, and may further include a memory. The processor is configured to execute a computer program or instructions stored in the memory, to enable a chip system to implement the method according to the second aspect or the third aspect, and any one of the possible implementations of the second aspect or the third aspect.

According to a fifteenth aspect, a chip is provided. The chip includes a processor, and may further include a memory. The processor is configured to execute a computer program or instructions stored in the memory, to enable a chip system to implement the method according to the first aspect and any one of the possible implementations of the first aspect.

The aspects or another aspect of this application is clearer and more comprehensible in descriptions of the following embodiments.

### BRIEF DESCRIPTION OF DRAWINGS

FIG. 1 is a schematic of a network architecture according to an embodiment of this application;
FIG. 2 is a schematic flowchart of a signal transmission method according to an embodiment of this application;
FIG. 3 is a diagram of a power modulation depth according to an embodiment of this application;
FIG. 4 is a diagram of overall modulation according to an embodiment of this application;
FIG. 5 is a diagram of a power modulation depth according to an embodiment of this application;
FIG. 6 is a diagram of overall modulation according to an embodiment of this application;
FIG. 7 is a diagram of partial modulation in time domain according to an embodiment of this application;
FIG. 8 is a diagram of partial modulation in frequency domain according to an embodiment of this application;
FIG. 9 is a diagram of a bandwidth according to an embodiment of this application;
FIG. 10 is a diagram of signal modulation according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

The following describes in detail embodiments of this application with reference to the accompanying drawings of the specification.

The communication method provided in embodiments of this application may be applied to a 4th generation (4th generation, 4G) communication system, for example, long-term evolution (long-term evolution, LTE), may be applied to a 5th generation (5th generation, 5G) communication system, for example, 5G new radio (new radio, NR), or applied to various future communication systems, for example, a 6th generation (6th generation, 6G) communication system.

A method and an apparatus provided in embodiments of this application are based on a same or similar technical concept. Because problem solving principles of the method and the apparatus are similar, mutual reference may be made to implementations of the apparatus and the method. Repeated descriptions are not described.

The following describes some terms in embodiments of this application, to facilitate understanding of a person skilled in the art.

Time-frequency resource: A time-frequency resource in an NR system includes one or more orthogonal frequency-division multiplexing (orthogonal frequency-division multiplexing, OFDM) symbols in time domain, and includes one or more subcarriers in frequency domain. The smallest time-frequency resource includes an OFDM symbol and a subcarrier, and is referred to as a resource element (resource element, RE).

Modulation: A process of loading a to-be-sent bit stream to a physical signal is referred to as modulation. The NR system includes a plurality of modulation schemes. Specifically, both uplink and downlink of the NR system support phase shift keying modulation or quadrature amplitude modulation. The phase shift keying modulation may include binary phase shift keying, π/2-binary phase shift keying, quadrature phase shift keying (quadrature phase shift keying, QPSK) modulation, and the like. The quadrature amplitude modulation may include modulation schemes such as 16 quadrature amplitude modulation (quadrature amplitude modulation, QAM), 64 QAM, and 256 QAM. Because the NR system supports a wide range of application scenarios, it is likely that a supported modulation scheme needs to be further extended in the future. In the future, a modulation scheme with a modulation order higher than 256 QAM will be supported, for example, 1024 QAM. In this embodiment of this application, amplitude shift keying (amplitude shift keying, ASK) modulation may be further supported.

A network device in embodiments of this application may be a device in a wireless network. For example, the network device may be a device that is deployed in a radio access network and that provides a wireless communication function for the terminal device. For example, the network device may be a radio access network (radio access network, RAN) node that connects a terminal device to a wireless network, and may also be referred to as an access network device. In embodiments of this application, an apparatus configured to implement a function of the network device may be a network device, may be a module or a unit that can be used in the network device, or may be an apparatus that can support the network device in implementing the function, for example, a chip system. The apparatus may be installed in the network device or used in a matching manner with the network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), a transmission reception point (transmission reception point, TRP), or the like; or may be a network device in a 5G mobile communication system, for example, a next generation NodeB (next generation NodeB, gNB), a transmission reception point (transmission reception point, TRP) or a TP in an NR system; or one antenna panel or one group of antenna panels (including a plurality of antenna panels) of a base station in a 5G mobile communication system. Alternatively, the network device may be a network node that forms a gNB or a transmission point, for example, a BBU, a distributed unit (distributed unit, DU), or the like.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a MAC layer, and a physical (physical, PHY) layer. The AAU implements some processing functions at the physical layer, radio frequency processing, and a function related to an active antenna. Information at the RRC layer is finally changed to information at the PHY layer, or is changed from information at the PHY layer. Therefore, in the architecture, higher layer signaling (for example, RRC layer signaling) may also be considered to be sent by the DU, or sent by the DU and the AAU. It may be understood that, the network device may be a device including one or more of a CU node, a DU node, and an AAU node. In addition, the CU may be classified as a network device in the RAN, or a network device in a core network (core network, CN). This is not limited in this application.

A terminal device in embodiments of this application may be a wireless terminal device that can receive scheduling and indication information of a network device. The terminal device may be a device that provides a user with voice and/or data connectivity, a hand-held device with a wireless connection function, or another processing device connected to a wireless modem. In embodiments of this application, an apparatus configured to implement a function of the terminal device may be a terminal device, may be a module or a unit that can be used in the terminal device, or may be an apparatus that can support the terminal device in implementing the function, for example, a chip system. The apparatus may be installed in the terminal device or used in a matching manner with the terminal device.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity to a user), for example, a hand-held device with a wireless connection function or an in-vehicle device. Currently, some examples of terminal devices are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in internet of vehicles, a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be an in-vehicle device, a complete vehicle device, an in-vehicle module, a vehicle, or the like. The wireless terminal in industrial control may be a camera, a robot, or the like. The wireless terminal in the smart home may be a television, an air conditioner, a sweeper, a speaker, a set-top box, or the like.

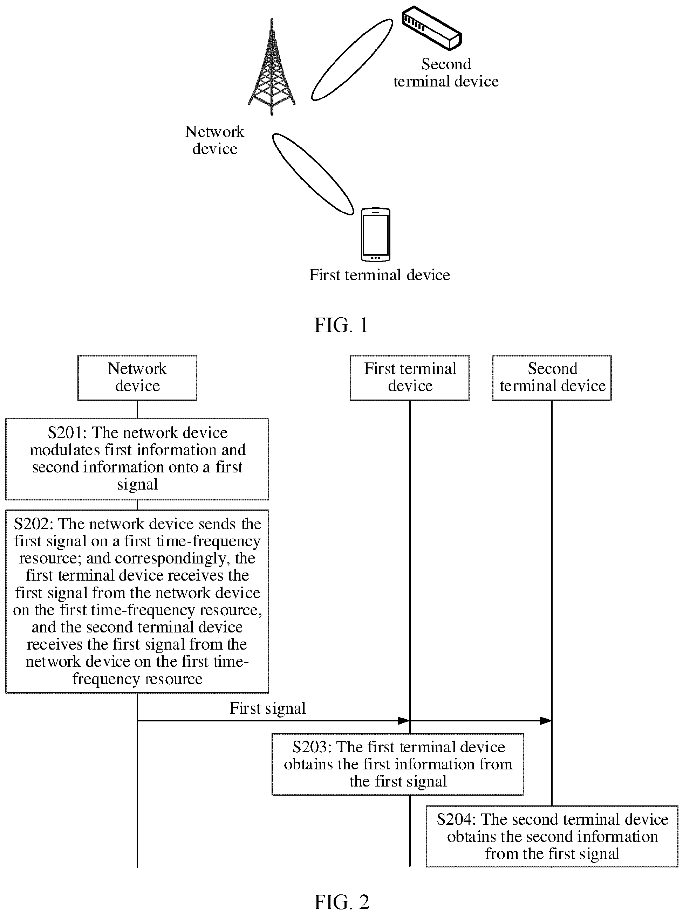

FIG. 1 is a schematic of a network architecture according to an embodiment of this application. In the network, a network device may provide services for a plurality of terminal devices. A first terminal device and a second terminal device are used as an example in the figure, but a specific quantity of terminal devices is not limited. In a possible implementation, the first terminal device may be a legacy (legacy) terminal device, the second terminal device may be a low-capability terminal device, and a maximum bandwidth supported by the first terminal device is greater than a maximum bandwidth supported by the second terminal device. The first terminal device can demodulate a signal modulated by using a complex modulation scheme. For example, the first terminal device can demodulate a signal modulated by using quadrature phase shift keying or 16 quadrature amplitude modulation, and the second terminal device can demodulate a signal modulated by using amplitude shift keying or include a module that can demodulate a signal modulated by using amplitude shift keying. The second terminal device mentioned in this application may be a device or a module or unit in a device that can demodulate a signal modulated by using amplitude shift keying.

This application provides a method. A network device may send a signal by using a same complete time-frequency resource, and the signal may be modulated by using a modulation scheme supported by a first terminal device and a modulation scheme supported by a second terminal device, so that the first terminal device and the second terminal device can receive the signal on the same time-frequency resource, to reduce resources and improving a system capacity.

It may be further understood that, the steps in the foregoing embodiments of this application are merely examples for descriptions, and this is not strictly limited herein. In addition, sequence numbers of the foregoing steps do not mean an execution sequence. The execution sequence of the processes should be determined based on functions and internal logic of the processes, and should not constitute any limitation on the implementation processes of embodiments of this application.

It may be further understood that, some optional features in embodiments of this application may be independent of other features in some scenarios, or may be combined with other features in some scenarios. This is not limited.

It may be further understood that, solutions in embodiments of this application may be appropriately combined for use, and explanations or descriptions of terms in embodiments may be mutually referenced or explained in embodiments. This is not limited.

The network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of a new service scenario, the technical solutions provided in embodiments of this application are also applicable to similar technical problems.

In embodiments of this application, interaction between a network device and a terminal device is used as an example for descriptions. An operation performed by the network device may also be performed by a chip or a module in the network device, and an operation performed by the terminal device may also be performed by a chip or a module in the terminal device.

FIG. 2 is a schematic flowchart of a signal transmission method according to an embodiment of this application. In the procedure, interaction between a network device and a terminal device is used as an example for descriptions. The network device may be the network device in FIG. 1, the first terminal device may be the first terminal device in FIG. 1, and the second terminal device may be the second terminal device in FIG. 1. The method includes the following steps.

S201: The network device modulates first information and second information onto a first signal.

A first modulation scheme for the first information is different from a second modulation scheme for the second information. In a possible implementation, the first modulation scheme is phase shift keying modulation or quadrature amplitude modulation, and the second modulation scheme is amplitude shift keying modulation.

In this embodiment of this application, phase shift keying modulation may include binary phase shift keying modulation, π/2-binary phase shift keying modulation, QPSK modulation, and the like. A modulation order of the quadrature amplitude modulation may be greater than or equal to 16, and the quadrature amplitude modulation may be a modulation scheme such as 16 quadrature amplitude modulation, 64 quadrature amplitude modulation, 256 quadrature amplitude modulation, or 512 quadrature amplitude modulation. The amplitude shift keying modulation may include on-off keying (on-off keying, OOK) modulation, 4 amplitude shift keying modulation, and the like.

In this embodiment of this application, the first information may be information transmitted to the first terminal device, that is, a receiver of the first information is the first terminal device. Specific content of the first information is not limited. For example, the first information may include at least one of user-level control information, common control information, and data information. Correspondingly, the second information may be information transmitted to the second terminal device, that is, a receiver of the second information is the second terminal device. Specific content of the second information is not limited. For example, the second information may include at least one of a broadcast message, a paging message, and a random access response message.

Optionally, before modulating the first signal, the network device may determine, depending on an actual situation, whether to modulate different information onto a same signal by using different modulation schemes. In this embodiment of this application, the network device may determine, in the following two cases, to modulate different information onto a same signal by using different modulation schemes.

Case 1: The network device determines, based on an indication of the first terminal device, whether to modulate the first information and the second information onto the first signal.

Specifically, the network device may receive first indication information from the first terminal device. If the first indication information indicates to modulate different information onto a same signal by using different modulation schemes, the network device determines to modulate different information onto a same signal by using different modulation schemes when sending the signal to the first terminal device. After receiving the first indication information, the network device may determine, based on the first indication information, to modulate the first information and the second information onto the first signal.

If the first indication information indicates to modulate the information onto a same signal by using the first modulation scheme, or the first indication information indicates to modulate the information onto a same signal by using a modulation scheme, the network device determines to modulate the information onto a same signal by using a modulation scheme when sending the signal to the first terminal device, for example, modulate the information onto a same signal by using the first modulation scheme.

For example, the first indication information may include one bit. When the first indication information is 1, it indicates that different information is modulated onto a same signal by using different modulation schemes. When the first indication information is 0, it indicates that the information is modulated onto a same signal by using the first modulation scheme. Details may be shown in Table 1.

**Table 1**

| First indication information | Modulation scheme |
|---|---|
| 1 | Use different modulation schemes |
| 0 | Use a first modulation scheme |

Table 1 is merely an example. The first indication information may alternatively include a plurality of bits, and there may be another value of the first indication information. Examples are not described herein one by one.

A specific case in which the first terminal device determines to receive a signal modulated by using a plurality of modulation schemes or receive a signal modulated by using a modulation scheme is not limited in this application. For example, the first terminal device may measure a reference signal from the network device, to obtain at least one of a reference signal received power (reference signal received power, RSRP) and a signal to interference plus noise ratio (signal to noise and interference ratio, SINR). A specific process in which the first terminal device measures the reference signal to obtain the SINR and/or the RSRP is not limited in this application. Details are not described herein again. Further, the first terminal device determines, based on the RSRP and/or the SINR, a specific modulation scheme to be used. For example, there are following three implementations.

Implementation 1: If the SINR is greater than or equal to a first threshold, the first terminal device determines that a signal modulated by using different modulation schemes can be received, so that the first indication information may indicate to modulate different information onto a same signal by using different modulation schemes. If the SINR is less than the first threshold, the first terminal device determines that a signal modulated by using different modulation schemes cannot be received, so that the first indication information may indicate to modulate information onto a same signal by using the first modulation scheme. A specific value of the first threshold may be preconfigured by the network device, or may be independently determined by the first terminal device, or may be preset. This is not limited in this application. In this embodiment of this application, "greater than or equal to" may be replaced with "greater than", and "less than" may be replaced with "less than or equal to". Correspondingly, "less than or equal to" may be replaced with "less than", and "greater than" may be replaced with "greater than or equal to". Details are not described below again.

For example, with reference to the example in Table 1, the first indication information determined by the first terminal device based on the SINR may be shown in Table 2.

**Table 2**

| SINR | First indication information |
|---|---|
| Greater than or equal to the first threshold | 1 |
| Less than the first threshold | 0 |

In Table 2, when the SINR is greater than or equal to the first threshold, the first indication information is 1; or when the SINR is less than the first threshold, the first indication information is 0.

The SINR is an indicator for measuring signal quality. When the SINR is greater than or equal to the first threshold, it indicates that signal quality is good. Therefore, when the network device modulates a signal by using a plurality of modulation schemes, impact on a signal received by the first terminal device is small, and the first terminal device may demodulate, from the signal modulated by using the plurality of modulation schemes, information that needs to be received.

Implementation 2: If the RSRP is greater than or equal to a second threshold, the first terminal device determines that a signal modulated by using different modulation schemes can be received, so that the first indication information may indicate to modulate different information onto a same signal by using different modulation schemes. If the RSRP is less than the second threshold, the first terminal device determines that a signal modulated by using different modulation schemes cannot be received, so that the first indication information may indicate to modulate information onto a same signal by using the first modulation scheme. A specific value of the second threshold may be preconfigured by the network device, or may be independently determined by the first terminal device, or may be preset. This is not limited in this application.

For example, with reference to the example in Table 1, the first indication information determined by the first terminal device based on the RSRP may be shown in Table 3.

**Table 3**

| RSRP | First indication information |
|---|---|
| Greater than or equal to the second threshold | 1 |
| Less than the second threshold | 0 |

In Table 3, when the RSRP is greater than or equal to the second threshold, the first indication information is 1; or when the RSRP is less than the second threshold, the first indication information is 0.

The RSRP is also an indicator for measuring signal quality. When the RSRP is greater than or equal to the second threshold, it indicates that signal quality is good. Therefore, when the network device modulates a signal by using a plurality of modulation schemes, impact on a signal received by the first terminal device is small, and the first terminal device may demodulate, from the signal modulated by using the plurality of modulation schemes, information that needs to be received.

Implementation 3: If the SINR is greater than or equal to a first threshold, and the RSRP is greater than or equal to a second threshold, the first terminal device determines that a signal modulated by using different modulation schemes can be received, so that the first indication information may indicate to modulate different information onto a same signal by using different modulation schemes. If the SINR is less than the first threshold, and the RSRP is less than the second threshold, the first terminal device may indicate, by using the first indication information, to modulate information onto a same signal by using the first modulation scheme. If the SINR is less than the first threshold and the RSRP is greater than or equal to the second threshold, or the SINR is greater than or equal to the first threshold and the RSRP is less than the second threshold, the first terminal device may indicate, by using the first indication information, to modulate information onto a same signal by using the first modulation scheme, or may indicate, by using the first indication information, to modulate different information onto a same signal by using different modulation schemes.

For example, with reference to the example in Table 1, the first indication information determined by the first terminal device based on the SINR and the RSRP may be shown in Table 4.

**Table 4**

| | RSRP is greater than or equal to the second threshold | RSRP is less than the second threshold |
|---|---|---|
| SINR is greater than or equal to the first threshold | 1 | 0/1 |
| SINR is less than the first threshold | 0/1 | 0 |

In Table 4, when the SINR is greater than or equal to the first threshold and the RSRP is greater than or equal to the second threshold, the first indication information is 1; when the SINR is less than the first threshold and the RSRP is less than the second threshold, the first indication information is 0; or when the SINR is less than the first threshold and the RSRP is greater than or equal to the second threshold, or when the SINR is greater than or equal to the first threshold and the RSRP is less than the second threshold, the first indication information may be 0 or 1.

Case 2: The network device autonomously determines whether to modulate the first information and the second information onto the first signal.

Specifically, the network device may receive at least one of the SINR and the RSRP from the first terminal device. The at least one of the SINR and the RSRP may be obtained by the first terminal device by measuring the reference signal from the network device. A specific process is not limited herein.

Implementation 1: If the SINR is greater than or equal to a first threshold, the network device determines to modulate different information onto a same signal by using different modulation schemes, so that the first information and the second information may be modulated onto the first signal. If the SINR is less than the first threshold, the network device determines to modulate information to one signal by using a modulation scheme, so that the first information and the second information may be separately modulated onto different signals.

Implementation 2: If the RSRP is greater than or equal to a second threshold, the network device determines to modulate different information onto a same signal by using different modulation schemes, so that the first information and the second information may be modulated onto the first signal. If the RSRP is less than the second threshold, the network device determines to modulate information to one signal by using a modulation scheme, so that the first information and the second information may be separately modulated onto different signals.

Implementation 3: If the SINR is greater than or equal to a first threshold, and the RSRP is greater than or equal to a second threshold, the network device determines to modulate different information onto a same signal by using different modulation schemes, so that the first information and the second information may be modulated onto the first signal. If the SINR is less than the first threshold, and the RSRP is less than the second threshold, the network device may modulate information onto a same signal by using the first modulation scheme. If the SINR is less than the first threshold and the RSRP is greater than or equal to the second threshold, or the SINR is greater than or equal to the first threshold and the RSRP is less than the second threshold, the network device may modulate information to one signal by using a modulation scheme, or may modulate different information onto a same signal by using different modulation schemes.

In Case 1, when the first terminal device determines, based on the SINR and/or the RSRP, to modulate different information onto a same signal by using different modulation schemes, operation complexity of the network device can be reduced. If the network device determines, based on the SINR and/or the RSRP, to modulate different information onto a same signal by using different modulation schemes, signaling overheads can be reduced.

Optionally, in Case 1 or Case 2, the network device may further send second indication information to the first terminal device, where the second indication information indicates at least one of the following: the network device modulates different information onto a same signal by using different modulation schemes; and a location of the first time-frequency resource, including at least one of a start location of the first time-frequency resource and a bandwidth size.

Optionally, if the second indication information indicates the network device to modulate different information onto a same signal by using different modulation schemes, the first terminal device may receive the signal by using a performance enhancement method, for example, increasing a quantity of hybrid automatic repeat request (hybrid automatic repeat request, HARQ) combination times, or increasing a quantity of antennas for receiving the signal, so that a signal-to-noise ratio of the received signal can be improved.

If the second indication information indicates the location of the first time-frequency resource, the first terminal device can accurately receive the signal on the first time-frequency resource, to reduce complexity of receiving the signal by the first terminal device.

In this embodiment of this application, when the network device modulates the first information and the second information onto the first signal, the first information and the second information may be separately located in different domains of the first signal. For example, the first information is modulated into frequency domain of the first signal by using the first modulation scheme, and the second information is modulated into amplitude domain or power domain of the first signal by using the second modulation scheme. In other words, when modulating the first information and the second information, the network device performs hybrid modulation by using a plurality of different modulation schemes, and respectively modulates the first information and the second information into different domains of the first signal. Specifically, the network device may modulate the first information into frequency domain of the first signal by using the first modulation scheme, and when modulating the first information, the network device may further modulate the second information into amplitude domain or power domain of the first signal by using the second modulation scheme. The network device may modulate the first information and the second information onto the first signal in parallel. The network device neither first modulates the first information onto the first signal and then modulate the second information onto the first signal, nor first modulates the second information onto the first signal and then modulate the first information onto the first signal.

In this embodiment of this application, a specific process in which the network device modulates the first information by using the first modulation scheme is not limited. The following mainly describes how the network device modulates the second information by using the second modulation scheme.

The second modulation scheme mainly relates to a transmit power of a modulated signal. Specifically, when the first signal is sent on the first time-frequency resource, the first signal corresponds to one transmit power in each resource element on the first time-frequency resource. To distinguish a bit 0 from a bit 1 by using the power of the signal, an average power of all resource elements corresponding to the bit 0 and an average power of all resource elements corresponding to the bit 1 may be set to different powers. Therefore, a parameter mainly related to the second modulation scheme is a modulation depth. The modulation depth may be understood as a power that needs to be reduced by the average power of all resource elements corresponding to the bit 0 based on a reference power, or a power that needs to be increased by the average power of all resource elements corresponding to the bit 1 based on a reference power. The reference power may be the average power of all resource elements on the first time-frequency resource on which the first information is modulated by using the first modulation scheme. Optionally, after the second modulation is used, in the bits carrying the second information, a ratio of the average power of all resource elements corresponding to the bit 1 to the average power of all resource elements corresponding to the bit 0 is greater than or equal to 20 dB.

In a first possible implementation, when using the second modulation scheme, the network device may perform overall modulation on the first signal.

Overall modulation means that modulation depths on all resource elements corresponding to each bit carrying the second information are the same, or modulation depths on all time domain data corresponding to each bit carrying the second information are the same. Specifically, modulation depths on all resource elements corresponding to the bit 0 carrying the second information are the same, and modulation depths on all resource elements corresponding to the bit 1 carrying the second information are the same; or modulation depths on all samples corresponding to the bit 0 carrying the second information are the same, and modulation depths on all samples corresponding to the bit 1 carrying the second information are the same.

In other words, when overall modulation is used, in the bits carrying the second information, a power of each resource element (or sample) in all resource elements (or samples) corresponding to the bit 0 is a first power, and a power of each resource element (or sample) in all resource elements (or samples) corresponding to the bit 1 is a second power, where the first power is not equal to the second power.

Implementation 1: A modulation depth of the second modulation scheme is ∇p. In this manner, modulation depths on all resource elements (or samples) corresponding to the bit 0 carrying the second information are the same as modulation depths on all resource elements (or samples) corresponding to the bit 0 carrying the second information. A value range of ∇p is greater than or equal to 0 and less than or equal to P. P may be an average power of all resource elements on the first time-frequency resource on which the first signal is modulated by using the first modulation scheme.

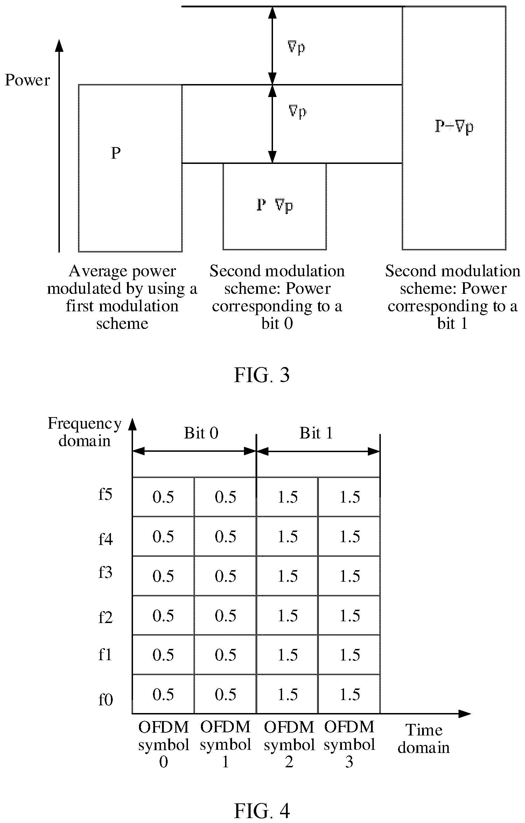

For example, it is assumed that each bit carrying the second information corresponds to Y OFDM symbols, and Y is an integer greater than 0. If overall modulation is performed, as shown in FIG. 3, it is assumed that when the first signal is modulated by using the first modulation scheme, an average power of all resource elements on the first time-frequency resource is P. When the first signal is modulated by using the second modulation scheme, in the bits carrying the second information, a power of each of all resource elements corresponding to the bit 0 may be modulated to P-∇p, and a power of each of all resource elements corresponding to the bit 1 may be modulated to P+∇p.

For example, as shown in FIG. 4, the first time-frequency resource includes four OFDM symbols in time domain, namely, a symbol 0 to a symbol 3, and includes six resource elements in frequency domain, where corresponding frequency-domain locations are f0 to f5. For example, each bit carrying the second information corresponds to two OFDM symbols, the first two OFDM symbols correspond to the bit 0, and the last two OFDM symbols correspond to the bit 1. Assuming that P=1 and ∇p=0.5, powers of all resource elements corresponding to the bit 0, in other words, each of resource elements included in the symbol 0 and the symbol 1, may be modulated to 0.5, and powers of all resource elements corresponding to the bit 1, in other words, each of resource elements included in the symbol 2 and the symbol 3, may be modulated to 1.5.

Implementation 2: A first modulation depth on all resource elements (or samples) corresponding to the bit 1 carrying the second information is different from a second modulation depth on all resource elements (or samples) corresponding to the bit 0 carrying the second information. The first modulation depth is ∇p1, and a value range of ∇p1 is greater than or equal to 0 and less than or equal to P. The second modulation depth is ∇p2, and a value range of ∇p2 is greater than or equal to 0 and less than or equal to P. ∇p1 may be equal to ∇p2, or may not be equal to ∇p2.

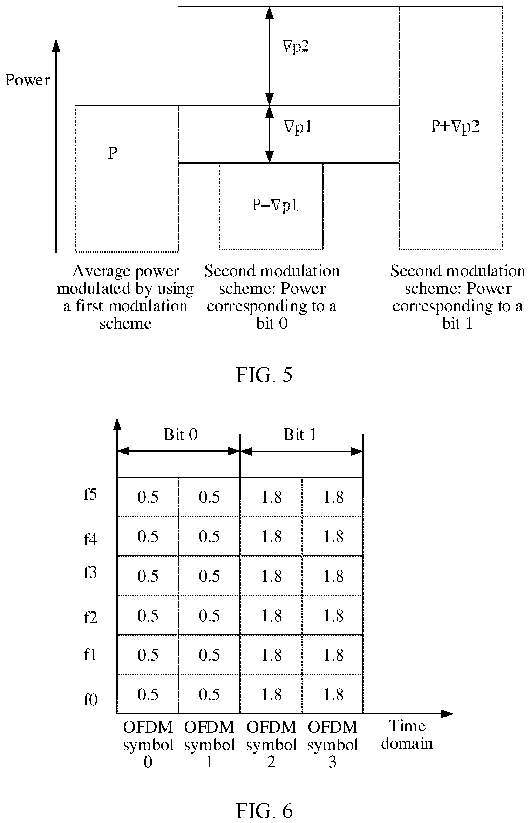

For example, it is assumed that each bit carrying the second information corresponds to Y OFDM symbols. If overall modulation is performed, as shown in FIG. 5, in the bits carrying the second information, a power of each of all resource elements corresponding to the bit 0 may be modulated to P-∇p1, and a power of each of all resource elements corresponding to the bit 1 may be modulated to P+∇p2.

For example, as shown in FIG. 6, the first time-frequency resource includes four OFDM symbols in time domain, namely, a symbol 0 to a symbol 3, and includes six resource elements in frequency domain, where corresponding frequency-domain locations are f0 to f5. For example, each bit carrying the second information corresponds to two OFDM symbols, the first two OFDM symbols correspond to the bit 0, and the last two OFDM symbols correspond to the bit 1. Assuming that P=1, ∇p1=0.5, and ∇p2=0.8, powers of all resource elements corresponding to the bit 0, in other words, each of resource elements included in the symbol 0 and the symbol 1, may be modulated to 0.5, and powers of all resource elements corresponding to the bit 1, in other words, each of resource elements included in the symbol 2 and the symbol 3, may be modulated to 1.8.

In a second possible implementation, when using the second modulation scheme, the network device may partially modulate the first signal.

Partial modulation means that modulation depths on all resource elements or samples corresponding to each bit carrying the second information are not exactly the same. Partial modulation can be classified into two types: partial modulation in time domain and partial modulation in frequency domain. Partial modulation in time domain means that modulation depths on all samples corresponding to each bit carrying the second information are not exactly the same, that is, modulation depths on at least two samples in all samples corresponding to each bit are different. Specifically, when partial modulation in frequency domain is used, all samples corresponding to each bit may be divided into a plurality of groups. Each group of samples includes at least one sample, each group of samples may include a same quantity of samples, or may include different quantities of samples. Powers of samples in each group of samples are the same, and powers of samples in different groups of samples are different.

With reference to the foregoing descriptions, in this embodiment of this application, when partial modulation in time domain is used, all samples corresponding to each bit in the bits carrying the second information may be divided into two groups, powers of one group of samples remain unchanged as P, and powers of the other group of samples are modulated to 2Q-P, where Q is an average value of powers of all samples corresponding to the bit. An average value of powers of all samples corresponding to the bit 0 may be P-∇p1, and an average value of powers of all samples corresponding to the bit 1 may be P+∇p2. ∇p1 may be equal to ∇p2, or may not be equal to ∇p2.

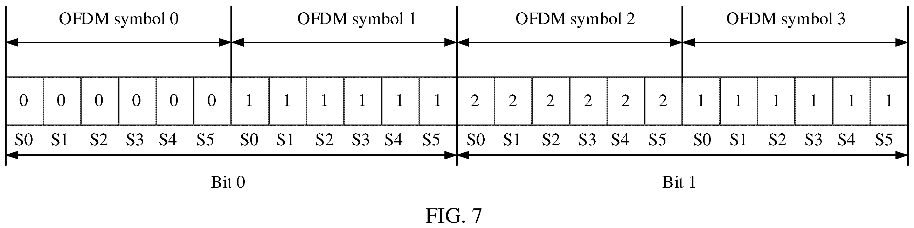

For example, as shown in FIG. 7, the first time-frequency resource includes four OFDM symbols in time domain, namely, a symbol 0 to a symbol 3, and each OFDM symbol includes six samples, respectively represented by S0 to S5. For example, each bit carrying the second information corresponds to two OFDM symbols, the first two OFDM symbols correspond to the bit 0, and the last two OFDM symbols correspond to the bit 1. Assuming that P=1, and ∇ p1=∇p2=0.5, an average value of powers of all samples corresponding to the bit 0, in other words, 12 samples included in the symbol 0 and the symbol 1, is 0.5, and an average value of powers of all samples corresponding to the bit 1, in other words, 12 samples included in the symbol 2 and the symbol 3, is 1.5. The network device may divide all samples corresponding to the bit 0 into two groups, and each group of samples includes six samples. For example, samples included in the symbol 1 are used as one group, and samples included in the symbol 0 are used as another group. A power of each sample included in the symbol 1 remains unchanged as 1, and a power of each of samples included in the symbol 0 is modulated to 0. In this way, the average power of all samples corresponding to the bit 0 is 0.5. Similarly, the network device may divide all samples corresponding to the bit 1 into two groups, and each group of samples includes six samples. For example, samples included in the symbol 3 are used as one group, and samples included in the symbol 2 are used as another group. A power of each sample included in the symbol 3 remains unchanged as 1, and a power of each of samples included in the symbol 2 is modulated to 2. In this way, the average power of all samples corresponding to the bit 0 is 1.5. In the foregoing example, ∇p1=Vp2 is merely used as an example for descriptions, and ∇p1 may not be equal to ∇p2.

Partial modulation in frequency domain means that modulation depths on all resource elements corresponding to each bit carrying the second information are not exactly the same, that is, modulation depths on at least two resource elements in all resource elements corresponding to each bit are different. Specifically, when partial modulation in frequency domain is used, all resource elements corresponding to each bit may be divided into a plurality of groups. Each group of resource elements includes at least one resource element, and each group of resource elements may include a same quantity of resource elements, or may include different quantities of resource elements. Powers of resource elements in each group of resource elements are the same, and powers of resource elements in different groups of resource elements are different.

With reference to the foregoing descriptions, in this embodiment of this application, when partial modulation in frequency domain is used, all resource elements corresponding to each bit in the bits carrying the second information may be divided into two groups, powers of one group of resource elements remain unchanged as P, and powers of the other group of resource elements are modulated to 2Q-P, where Q is an average value of powers of all resource elements corresponding to the bit. An average value of powers of all resource elements corresponding to the bit 0 may be P-∇p1, and an average value of powers of all resource elements corresponding to the bit 1 may be P+∇p2. ∇p1 may be equal to ∇p2, or may not be equal to ∇p2.

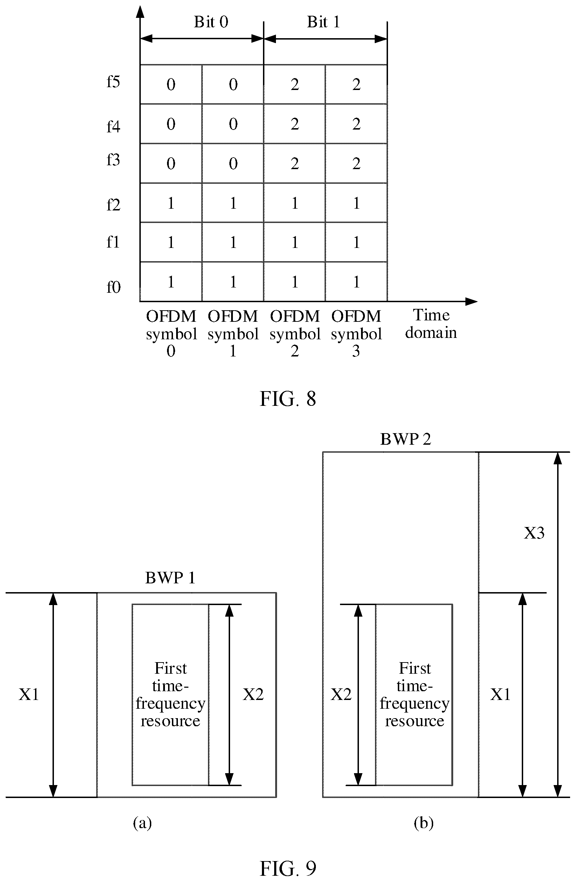

For example, as shown in FIG. 8, the first time-frequency resource includes four OFDM symbols in time domain, namely, a symbol 0 to a symbol 3, and includes six resource elements in frequency domain, where corresponding frequency-domain locations are f0 to f5. For example, each bit carrying the second information corresponds to two OFDM symbols, the first two OFDM symbols correspond to the bit 0, and the last two OFDM symbols correspond to the bit 1. Assuming that P=1, and ∇p1=∇p2=0.5, an average value of powers of all resource elements corresponding to the bit 0, in other words, 12 resource elements included in the symbol 0 and the symbol 1, is 0.5, and an average value of powers of all resource elements corresponding to the bit 1, in other words, 12 resource elements included in the symbol 2 and the symbol 3, is 1.5. The network device may divide all resource elements corresponding to the bit 0 into two groups, and each group of resource elements includes six resource elements. For example, resource elements at frequency-domain locations f0 to f2 in the symbol 0 and the symbol 1 are used as one group, and resource elements at frequency-domain locations f3 to f5 in the symbol 0 and the symbol 1 are used as another group. A power of each resource element at frequency-domain locations f0 to f2 in the symbol 0 and the symbol 1 remains unchanged as 1, and a power of each resource element at frequency-domain locations f3 to f5 in the symbol 0 and the symbol 1 is modulated to 0. In this way, the average value of powers of all resource elements corresponding to the bit 0 is 0.5. Similarly, the network device may divide all resource elements corresponding to the bit 1 into two groups, and each group of resource elements includes six resource elements. For example, resource elements at frequency-domain locations f0 to f2 in the symbol 2 and the symbol 3 are used as one group, and resource elements at frequency-domain locations f3 to f5 in the symbol 2 and the symbol 3 are used as another group. A power of each resource element at frequency-domain locations f0 to f2 in the symbol 2 and the symbol 3 remains unchanged as 1, and a power of each resource element at frequency-domain locations f3 to f5 in the symbol 2 and the symbol 3 is modulated to 2. In this way, an average value of powers of all resource elements corresponding to the bit 1 is 1.5. In the foregoing example, ∇p1=∇p2 is merely used as an example for descriptions, and ∇p1 may not be equal to ∇p2.

The foregoing is merely an example. When using the second modulation scheme, the network device may also modulate the power of the resource element in another manner. This is not limited in this application.

Optionally, in this embodiment of this application, the bits modulated onto the first signal and corresponding to the second information are coded bits obtained through line encoding. The line encoding is at least one of Manchester encoding and differential Manchester encoding. Downlink coverage performance of the second terminal can be improved by using line encoding. When original bits of the second information are encoded by using the line encoding to obtain the coded bits, a quantity of symbols included on the first time-frequency resource is an even number. In this way, it can be ensured that the first time-frequency resource has no redundant symbols, and network resources are reduced.

S202: The network device sends the first signal on the first time-frequency resource. Correspondingly, the first terminal device receives the first signal from the network device on the first time-frequency resource, and the second terminal device receives the first signal from the network device on the first time-frequency resource.

In this embodiment of this application, a bandwidth corresponding to the first time-frequency resource may be less than or equal to a maximum bandwidth of the second terminal device, and the maximum bandwidth of the second terminal device is less than a maximum bandwidth of the first terminal device. How the network device determines the maximum bandwidth of the second terminal device is not limited in this application. For example, the network device may receive capability information from the second terminal device, where the capability information indicates the maximum bandwidth of the second terminal device.

By setting the bandwidth of the first time-frequency resource to be less than or equal to the maximum bandwidth capability of the second terminal device, it can be ensured that the first signal on the first time-frequency resource can be received by both the first terminal device and the second terminal device, to improve a communication capacity.

The network device may preconfigure a first bandwidth part (bandwidth part, BWP) for the first terminal device and the second terminal device. In an implementation, a bandwidth of the first bandwidth part may be less than or equal to the maximum bandwidth of the second terminal device. For example, as shown in (a) in FIG. 9, a bandwidth of a first bandwidth part BWP 1 configured by the network device is equal to the maximum bandwidth X1 of the second terminal device, and a bandwidth X2 of the first time-frequency resource is less than or equal to the bandwidth X1 of the BWP 1. In this way, it can be ensured that the first signal on the first time-frequency resource can be received by both the first terminal device and the second terminal device.

In addition, if the bandwidth X2 of the first time-frequency resource is equal to the bandwidth X1 of the BWP 1, the network device may not need to additionally indicate information such as the bandwidth and the location of the first time-frequency resource to the first terminal device and the second terminal device, to reduce signaling overheads.

In another implementation, a bandwidth of the first bandwidth part may be greater than the maximum bandwidth of the second terminal device. For example, as shown in (b) in FIG. 9, a bandwidth X3 of a first bandwidth part BWP 2 is greater than the maximum bandwidth X1 of the second terminal device. In this case, the network device sets the bandwidth X2 of the first time-frequency resource to be less than the bandwidth of the BWP 2 and less than or equal to the maximum bandwidth X1 of the second terminal device. In addition, for the first terminal device, in the first bandwidth part, a time-frequency resource other than the first time-frequency resource may be used for transmitting other information of the first terminal device. This is not limited in this application.

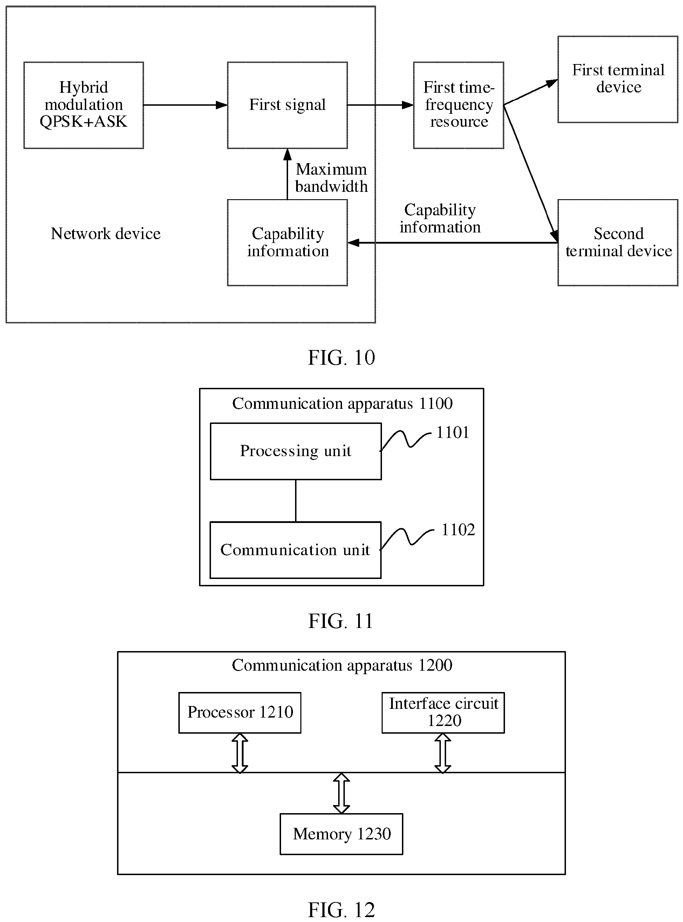

With reference to the foregoing descriptions, it is assumed that the first modulation scheme is QPSK, and the second modulation scheme is ASK. As shown in FIG. 10, the network device determines, by using the capability information reported by the second terminal device, the maximum bandwidth supported by the second terminal device. If the network device determines to modulate both the first information and the second information onto the first signal by using hybrid modulation schemes, the network device may modulate, by using the hybrid modulation schemes, the first information into frequency domain of the first signal by using QPSK, and modulate the second information into amplitude domain or power domain of the first signal by using ASK, to obtain the first signal including the first information and the second information. The network device sends the first signal on the first time-frequency resource, where the bandwidth of the first time-frequency resource is less than or equal to the maximum bandwidth supported by the second terminal device.

S203: The first terminal device obtains the first information from the first signal.

The first terminal device may demodulate the first signal by using a demodulation scheme corresponding to the first modulation scheme, to obtain the first information. A specific demodulation process is not limited in this application. Details are not described herein again.

S204: The second terminal device obtains the second information from the first signal.

The second terminal device may demodulate the first signal by using a demodulation scheme corresponding to the second modulation scheme, to obtain the second information. A specific demodulation process is not limited in this application. Details are not described herein again.

According to the foregoing method, the first signal sent by the network device by using a time-frequency resource, that is, the first time-frequency resource, includes the first information and the second information that are modulated by using different modulation schemes, so that the information is sent to a plurality of terminal devices on a same time-frequency resource by using different modulation schemes, to improve network resource utilization.

In the foregoing embodiments provided in this application, the methods provided in embodiments of this application are described from a perspective of interaction between devices. To implement functions in the methods provided in the foregoing embodiments of this application, a network device or a terminal device may include a hardware structure and/or a software module, and the functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, FIG. 11 is a diagram of a structure of a communication apparatus according to an embodiment of this application. The communication apparatus is configured to implement functions of the network device or the terminal device in the foregoing method. For example, the apparatus may be a software module or a chip system. In this embodiment of this application, the chip system may include a chip, or may include a chip and another discrete component. The communication apparatus 1100 may include a processing unit 1101 and a communication unit 1102.

In this embodiment of this application, the communication unit may also be referred to as a transceiver unit, and may include a sending unit and/or a receiving unit, which are respectively configured to perform sending and receiving steps of the network device or the terminal device in the foregoing method embodiments.

The following describes in detail a communication apparatus provided in embodiments of this application with reference to FIG. 11 and FIG. 12. It should be understood that, descriptions of apparatus embodiments correspond to the descriptions of the method embodiments. Therefore, for content that is not described in detail, refer to the method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component configured to implement a receiving function in the communication unit 1102 may be considered as a receiving unit, and a component configured to implement a sending function in the communication unit 1102 may be considered as a sending unit. In other words, the communication unit 1102 includes a receiving unit and a sending unit. The communication unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

When the communication apparatus 1100 performs a function of the network device in the procedure shown in FIG. 2 in the foregoing embodiment:
the processing unit is configured to modulate first information and second information onto a first signal, where a first modulation scheme for the first information is different from a second modulation scheme for the second information, the first modulation scheme is phase shift keying modulation or quadrature amplitude modulation, and the second modulation scheme is amplitude shift keying modulation; and
the communication unit is configured to send the first signal on a first time-frequency resource.

In a possible implementation, the communication unit is further configured to receive first indication information from a first terminal device, where the first indication information indicates to modulate different information onto a same signal by using different modulation schemes; and
the processing unit is further configured to determine, based on the first indication information, to modulate the first information and the second information onto the first signal.

In a possible implementation, the communication unit is further configured to: receive, from the first terminal device, at least one of a signal to interference plus noise ratio and a reference signal received power; and
if the signal to interference plus noise ratio is greater than or equal to a first threshold, and/or the reference signal received power is greater than or equal to a second threshold, determine to modulate the first information and the second information onto the first signal.

In a possible implementation, the communication unit is further configured to send second indication information to the first terminal device, where the second indication information indicates the network device to modulate different information onto a same signal by using different modulation schemes, and/or indicates a location of the first time-frequency resource.

In a possible implementation, a bandwidth corresponding to the first time-frequency resource is less than or equal to a maximum bandwidth of a second terminal device, and the maximum bandwidth of the second terminal device is less than a maximum bandwidth of the first terminal device.

In a possible implementation, the communication unit is further configured to receive capability information from the second terminal device, where the capability information indicates the maximum bandwidth of the second terminal device.

In a possible implementation, the first information is modulated into frequency domain of the first signal by using the first modulation scheme, and the second information is modulated into amplitude domain or power domain of the first signal by using the second modulation scheme.

In a possible implementation, a modulation depth of the second modulation scheme is *∇p,* a value range of *∇p* is an open interval (0, P), and P is an average power of all resource elements on the first time-frequency resource on which the first signal is modulated by using the first modulation scheme.

In a possible implementation, when the second information is modulated by using the second modulation scheme, modulation depths on all resource elements corresponding to each bit carrying the second information are the same, or modulation depths on all samples corresponding to each bit carrying the second information are the same.

In a possible implementation, when the second information is modulated by using the second modulation scheme, modulation depths on all resource elements corresponding to each bit carrying the second information are not exactly the same, or modulation depths on all samples corresponding to each bit carrying the second information are not exactly the same.

In a possible implementation, the bits modulated onto the first signal and corresponding to the second information are coded bits obtained through line encoding.

In a possible implementation, the line encoding is at least one of Manchester encoding and differential Manchester encoding, and a quantity of symbols included on the first time-frequency resource is an even number.

In a possible implementation, the first information includes at least one of user-level control information, common control information, and data information.

In a possible implementation, the second information includes at least one of a broadcast message, a paging message, or a random access response message.

When the communication apparatus 1100 performs a function of the first terminal device in the procedure shown in FIG. 2 in the foregoing embodiment:
the communication unit is configured to receive a first signal from a network device on a first time-frequency resource, where first information and second information are modulated onto the first signal, a first modulation scheme for the first information is different from a second modulation scheme for the second information, the first modulation scheme is phase shift keying modulation or quadrature amplitude modulation, and the second modulation scheme is amplitude shift keying modulation; and
the processing unit is configured to obtain the first information from the first signal.

In a possible implementation, the processing unit is further configured to determine at least one of a signal to interference plus noise ratio and a reference signal received power based on a reference signal from the network device; and
the communication unit is further configured to: if the signal to interference plus noise ratio is greater than or equal to a first threshold, and/or the reference signal received power is greater than or equal to a second threshold, send first indication information to the network device, where the first indication information indicates to modulate different information onto a same signal by using different modulation schemes.

In a possible implementation, the processing unit is further configured to determine at least one of a signal to interference plus noise ratio and a reference signal received power based on a reference signal from the network device; and
the communication unit is further configured to send at least one of the signal to interference plus noise ratio and the reference signal received power to the network device.

In a possible implementation, the communication unit is further configured to:
receive second indication information from the network device, where the second indication information indicates the network device to modulate different information onto a same signal by using different modulation schemes, and/or indicates a location of the first time-frequency resource.

In a possible implementation, a bandwidth corresponding to the first time-frequency resource is less than or equal to a maximum bandwidth of a second terminal device, and the maximum bandwidth of the second terminal device is less than a maximum bandwidth of the first terminal device.

In a possible implementation, the first information is modulated into frequency domain of the first signal by using the first modulation scheme, and the second information is modulated into amplitude domain or power domain of the first signal by using the second modulation scheme.

In a possible implementation, when the second information is modulated by using the second modulation scheme, modulation depths on all resource elements corresponding to each bit carrying the second information are the same, or modulation depths on all samples corresponding to each bit carrying the second information are the same.

In a possible implementation, a modulation depth of the second modulation scheme is *∇p,* a value range of *∇p* is an open interval from 0 to P, and P is an average power of all resource elements on the first time-frequency resource on which the first signal is modulated by using the first modulation scheme, or modulation depths on all samples corresponding to each bit carrying the second information are not exactly the same.

In a possible implementation, when the second information is modulated by using the second modulation scheme, modulation depths on all resource elements corresponding to each bit carrying the second information are not exactly the same.

In a possible implementation, the bits modulated onto the first signal and corresponding to the second information are coded bits obtained through line encoding.

In a possible implementation, the line encoding is at least one of Manchester encoding and differential Manchester encoding, and a quantity of symbols included on the first time-frequency resource is an even number.

When the communication apparatus 1100 performs a function of the second terminal device in the procedure shown in FIG. 2 in the foregoing embodiment:
the communication unit is configured to receive a first signal from a network device on a first time-frequency resource, where first information and second information are modulated onto the first signal, a first modulation scheme for the first information is different from a second modulation scheme for the second information, the first modulation scheme is phase shift keying modulation or quadrature amplitude modulation, and the second modulation scheme is amplitude shift keying modulation; and
the processing unit is configured to obtain the second information from the first signal.

In a possible implementation, a bandwidth corresponding to the first time-frequency resource is less than or equal to a maximum bandwidth of a second terminal device, and the maximum bandwidth of the second terminal device is less than a maximum bandwidth of the first terminal device.

In a possible implementation, the first information is modulated into frequency domain of the first signal by using the first modulation scheme, and the second information is modulated into amplitude domain or power domain of the first signal by using the second modulation scheme.

In a possible implementation, when the second information is modulated by using the second modulation scheme, modulation depths on all resource elements corresponding to each bit carrying the second information are the same, or modulation depths on all samples corresponding to each bit carrying the second information are the same.

In a possible implementation, a modulation depth of the second modulation scheme is *Vp,* a value range of *∇p* is an open interval from 0 to P, and P is an average power of all resource elements on the first time-frequency resource on which the first signal is modulated by using the first modulation scheme, or modulation depths on all samples corresponding to each bit carrying the second information are not exactly the same.

In a possible implementation, when the second information is modulated by using the second modulation scheme, modulation depths on all resource elements corresponding to each bit carrying the second information are not exactly the same, or modulation depths on all samples corresponding to each bit carrying the second information are not exactly the same.

In a possible implementation, the bits modulated onto the first signal and corresponding to the second information are coded bits obtained through line encoding.

In a possible implementation, the line encoding is at least one of Manchester encoding and differential Manchester encoding, and a quantity of symbols included on the first time-frequency resource is an even number.

The foregoing is merely an example. The processing unit 1101 and the communication unit 1102 may further perform other functions. For more detailed descriptions, refer to the related descriptions in the method embodiment shown in FIG. 2. Details are not described herein again.

FIG. 12 is a diagram of a structure of a communication apparatus according to an embodiment of this application. The apparatus shown in FIG. 12 may be an implementation of a hardware circuit of the apparatus shown in FIG. 11. The communication apparatus is applicable to the foregoing flowcharts, and performs the functions of the terminal device or the network device in the foregoing method embodiments. For ease of descriptions, FIG. 12 merely shows main components of the communication apparatus.

As shown in FIG. 12, the communication apparatus 1200 includes a processor 1210 and an interface circuit 1220. The processor 1210 and the interface circuit 1220 are coupled to each other. It may be understood that, the interface circuit 1220 may be a transceiver, a pin, an interface circuit, or an input/output interface. Optionally, the communication apparatus 1200 may further include a memory 1230, configured to store instructions executed by the processor 1210, store input data required by the processor 1210 to run the instructions, or store data generated after the processor 1210 runs the instructions.

When the communication apparatus 1200 is configured to implement the method shown in FIG. 2, the processor 1210 is configured to implement a function of the foregoing processing unit 1101, and the interface circuit 1220 is configured to implement a function of the foregoing communication unit 1102.

When the communication apparatus is a chip used in a terminal device, the chip in the terminal device implements the function of the terminal device in the foregoing method embodiments. The chip of the terminal device receives information from another module (for example, a radio frequency module or an antenna) in the terminal device, where the information is sent by a network device to the terminal device. Alternatively, the chip of the terminal device sends information to another module (for example, a radio frequency module or an antenna) in the terminal device, where the information is sent by the terminal device to a network device.

When the communication apparatus is a chip used in a network device, the chip in the network device implements the function of the network device in the foregoing method embodiments. The chip of the network device receives information from another module (for example, a radio frequency module or an antenna) in the network device, where the information is sent by a terminal device to the network device. Alternatively, the chip of the network device sends information to another module (for example, a radio frequency module or an antenna) in the network device, where the information is sent by the network device to a terminal device.

It may be understood that, the processor in embodiments of this application may be a central processing unit, or may be another general-purpose processor, a digital signal processor, an application-specific integrated circuit or another programmable logic device, a transistor logic device, a hardware component, or any combination thereof. The general-purpose processor may be a microprocessor or any conventional processor or the like.

The memory in embodiments of this application may be a random access memory, a flash memory, a read-only memory, a programmable read-only memory, an erasable programmable read-only memory, an electrically erasable programmable read-only memory, a register, a hard disk drive, a removable hard disk drive, or any other form of a storage medium well-known in the art.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that, computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A signal transmission method, comprising:
modulating, by a network device, first information and second information onto a first signal, wherein a first modulation scheme for the first information is different from a second modulation scheme for the second information, the first modulation scheme is phase shift keying modulation or quadrature amplitude modulation, and the second modulation scheme is amplitude shift keying modulation; and
sending, by the network device, the first signal on a first time-frequency resource.

2. The method according to claim 1, wherein the method further comprises:
receiving, by the network device, first indication information from a first terminal device, wherein the first indication information indicates to modulate different information onto a same signal by using different modulation schemes; and
determining, by the network device based on the first indication information, to modulate the first information and the second information onto the first signal.

3. The method according to claim 1, wherein the method further comprises:
receiving, by the network device, at least one of a signal to interference plus noise ratio or a reference signal received power from a first terminal device; and
if the signal to interference plus noise ratio is greater than or equal to a first threshold, and/or the reference signal received power is greater than or equal to a second threshold, determining, by the network device, to modulate the first information and the second information onto the first signal.

4. The method according to any one of claims 1 to 3, wherein the method further comprises:
sending, by the network device, second indication information to the first terminal device, wherein the second indication information indicates the network device to modulate different information onto a same signal by using different modulation schemes, and/or indicates a location of the first time-frequency resource.

5. The method according to any one of claims 1 to 4, wherein a bandwidth corresponding to the first time-frequency resource is less than or equal to a maximum bandwidth of a second terminal device, and the maximum bandwidth of the second terminal device is less than a maximum bandwidth of the first terminal device.

6. The method according to claim 5, wherein the method further comprises:
receiving, by the network device, capability information from the second terminal device, wherein the capability information indicates the maximum bandwidth of the second terminal device.

7. The method according to any one of claims 1 to 6, wherein the first information is modulated into frequency domain of the first signal by using the first modulation scheme, and the second information is modulated into amplitude domain or power domain of the first signal by using the second modulation scheme.

8. The method according to any one of claims 1 to 7, wherein a modulation depth of the second modulation scheme is *∇p,* a value range of *∇p* is an open interval (0, P), and P is an average power of all resource elements on the first time-frequency resource on which the first signal is modulated by using the first modulation scheme.

9. The method according to claim 8, wherein when the second information is modulated by using the second modulation scheme, modulation depths on all resource elements corresponding to each bit carrying the second information are not exactly the same, or modulation depths on all samples corresponding to each bit carrying the second information are not exactly the same.

10. The method according to any one of claims 1 to 9, wherein the bits modulated onto the first signal and corresponding to the second information are coded bits obtained through line encoding.

11. The method according to claim 10, wherein the line encoding is at least one of Manchester encoding and differential Manchester encoding, and a quantity of symbols comprised in the first time-frequency resource is an even number.

12. A signal transmission method, comprising:
receiving, by a first terminal device, a first signal from a network device on a first time-frequency resource, wherein first information and second information are modulated onto the first signal, a first modulation scheme for the first information is different from a second modulation scheme for the second information, the first modulation scheme is phase shift keying modulation or quadrature amplitude modulation, and the second modulation scheme is amplitude shift keying modulation; and
obtaining, by the first terminal device, the first information from the first signal.

13. The method according to claim 12, wherein the method further comprises:
determining, by the first terminal device, at least one of a signal to interference plus noise ratio and a reference signal received power based on a reference signal from the network device; and
if the signal to interference plus noise ratio is greater than or equal to a first threshold, and/or the reference signal received power is greater than or equal to a second threshold, sending, by the first terminal device, first indication information to the network device, wherein the first indication information indicates to modulate different information onto a same signal by using different modulation schemes.

14. The method according to claim 12, wherein the method further comprises:
determining, by the first terminal device, at least one of a signal to interference plus noise ratio and a reference signal received power based on a reference signal from the network device; and
sending, by the first terminal device, at least one of the signal to interference plus noise ratio and the reference signal received power to the network device.

15. The method according to any one of claims 12 to 14, wherein the method further comprises:
receiving, by the first terminal device, second indication information from the network device, wherein the second indication information indicates the network device to modulate different information onto a same signal by using different modulation schemes, and/or indicates a location of the first time-frequency resource.

16. A signal transmission method, comprising:
receiving, by a second terminal device, a first signal from a network device on a first time-frequency resource, wherein first information and second information are modulated onto the first signal, a first modulation scheme for the first information is different from a second modulation scheme for the second information, the first modulation scheme is phase shift keying modulation or quadrature amplitude modulation, and the second modulation scheme is amplitude shift keying modulation; and
obtaining, by the second terminal device, the second information from the first signal.

17. The method according to any one of claims 12 to 16, wherein a bandwidth corresponding to the first time-frequency resource is less than or equal to a maximum bandwidth of the second terminal device, and the maximum bandwidth of the second terminal device is less than a maximum bandwidth of the first terminal device.

18. The method according to any one of claims 12 to 17, wherein the first information is modulated into frequency domain of the first signal by using the first modulation scheme, and the second information is modulated into amplitude domain or power domain of the first signal by using the second modulation scheme.

19. The method according to any one of claims 12 to 18, wherein a modulation depth of the second modulation scheme is *∇p,* a value range of *∇p* is an open interval (0, P), and P is an average power of all resource elements on the first time-frequency resource on which the first signal is modulated by using the first modulation scheme; or modulation depths on all samples corresponding to each bit carrying the second information are not exactly the same.

20. The method according to claim 19, wherein when the second information is modulated by using the second modulation scheme, modulation depths on all resource elements corresponding to each bit carrying the second information are not exactly the same, or modulation depths on all samples corresponding to each bit carrying the second information are not exactly the same.

21. The method according to any one of claims 12 to 20, wherein the bits modulated onto the first signal and corresponding to the second information are coded bits obtained through line encoding.

22. The method according to claim 21, wherein the line encoding is at least one of Manchester encoding and differential Manchester encoding, and a quantity of symbols comprised in the first time-frequency resource is an even number.

23. A communication apparatus, comprising:
a processing unit, configured to modulate first information and second information onto a first signal, wherein a first modulation scheme for the first information is different from a second modulation scheme for the second information, the first modulation scheme is phase shift keying modulation or quadrature amplitude modulation, and the second modulation scheme is amplitude shift keying modulation; and
a communication unit, configured to send the first signal on a first time-frequency resource.

24. A communication apparatus, comprising:
a communication unit, configured to receive a first signal from a network device on a first time-frequency resource, wherein first information and second information are modulated onto the first signal, a first modulation scheme for the first information is different from a second modulation scheme for the second information, the first modulation scheme is phase shift keying modulation or quadrature amplitude modulation, and the second modulation scheme is amplitude shift keying modulation; and
a processing unit, configured to obtain the second information from the first signal.

25. A communication apparatus, comprising:
a communication unit, configured to receive a first signal from a network device on a first time-frequency resource, wherein first information and second information are modulated onto the first signal, a first modulation scheme for the first information is different from a second modulation scheme for the second information, the first modulation scheme is phase shift keying modulation or quadrature amplitude modulation, and the second modulation scheme is amplitude shift keying modulation; and
a processing unit, configured to obtain the second information from the first signal.

26. A communication apparatus, comprising a processor, wherein the processor is coupled to a memory; and
the processor is configured to execute a computer program or instructions stored in the memory, so that the communication apparatus implements the method according to any one of claims 1 to 11.

27. A communication apparatus, comprising a processor, wherein the processor is coupled to a memory; and
the processor is configured to execute a computer program or instructions stored in the memory, so that the communication apparatus implements the method according to any one of claims 12 to 15 and 17 to 22 or the method according to any one of claims 16 to 22.

28. A computer-readable storage medium, storing a computer program or instructions, wherein when the computer program or the instructions are run on a computer, the method according to any one of claims 1 to 22 is performed.

29. A computer program product, comprising instructions, wherein when the instructions are run on a computer, the method according to any one of claims 1 to 22 is performed.
